(19) Europäisches Patentamt / European Patent Office / Office européen des brevets

(11) **EP 3 860 161 A1**

(12) **EUROPEAN PATENT APPLICATION**
published in accordance with Art. 153(4) EPC

(43) Date of publication:
**04.08.2021 Bulletin 2021/31**

(21) Application number: **19880205.0**

(22) Date of filing: **02.09.2019**

(51) Int Cl.:
***H04W 4/02*** *(2018.01)*

(86) International application number:
**PCT/CN2019/103932**

(87) International publication number:
**WO 2020/088084 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.11.2018 CN 201811300851**

(71) Applicant: **Huawei Technologies Co., Ltd.**
**Shenzhen Guangdong 518129 (CN)**

(72) Inventors:
• **ZHANG, Yuxiang**
  **Shenzhen, Guangdong 518129 (CN)**
• **XIE, Hong**
  **Shenzhen, Guangdong 518129 (CN)**
• **ZHOU, Kai**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **INTERNET OF VEHICLES COMMUNICATION METHOD, POSITIONING METHOD, AND INTERNET OF VEHICLES COMMUNICATION APPARATUS**

(57) This application provides an internet of vehicles communication method and positioning method, and an internet of vehicles communications apparatus. The internet of vehicles communication method includes: An internet of vehicles communications apparatus generates positioning information. The positioning information includes a positioning position of a positioning unit of a first vehicle and an offset distance of the positioning unit relative to a positioning reference point of the first vehicle. The internet of vehicles communications apparatus is an apparatus installed in the first vehicle. The internet of vehicles communications apparatus sends the positioning information to another device. In this application, a current position of the first vehicle may be more accurately determined.

An internet of vehicles communications apparatus generates positioning information, where the positioning information includes a positioning position of a positioning unit of a first vehicle and an offset distance of the positioning unit relative to a positioning reference point of the first vehicle — 101

The internet of vehicles communications apparatus sends the positioning information to another device — 102

FIG. 1

EP 3 860 161 A1

**Description**

This application claims priority to Chinese Patent Application No. 201811300851.2, filed with the China National Intellectual Property Administration on November 2, 2018 and entitled "INTERNET OF VEHICLES COMMUNICATION METHOD AND POSITIONING METHOD, AND INTERNET OF VEHICLES COMMUNICATIONS APPARATUS", which is incorporated herein by reference in its entirety.

**TECHNICAL FIELD**

This application relates to the communications field, and more specifically, to an internet of vehicles communication method and positioning method, and an internet of vehicles communications apparatus.

**BACKGROUND**

In an internet of vehicles communications technology, positioning information (for example, the positioning information may be carried in a basic safety message (BSM) of a vehicle) is transmitted between different vehicles or between a vehicle and another device (for example, a roadside device). Generally, the positioning information may include a positioning position of a positioning unit of the vehicle (for example, the positioning information may be a longitude and a latitude at which the positioning unit of the vehicle is currently located).

After positioning information of a vehicle is obtained, a current position of the vehicle may be determined based on the positioning information of the vehicle. However, sizes of different vehicles vary greatly. Therefore, obtaining an accurate position of the vehicle based on the positioning information of the vehicle cannot meet a requirement on positioning precision in a high-precision positioning scenario.

**SUMMARY**

This application provides an internet of vehicles communication method and positioning method, and an internet of vehicles communications apparatus, to more accurately determine a current position of a vehicle.

According to a first aspect, an internet of vehicles communication method is provided. The method includes: An internet of vehicles communications apparatus generates positioning information. The positioning information includes a positioning position of a positioning unit of a first vehicle and an offset distance of the positioning unit relative to a positioning reference point of the first vehicle. The internet of vehicles communications apparatus is an apparatus installed in the first vehicle. The internet of vehicles communications apparatus sends the positioning information to another device.

The positioning information may be used to determine a specific current position of the first vehicle.

It should be understood that the positioning position of the positioning unit may be indicated by a longitude and a latitude of the positioning unit. In addition, the positioning unit may be integrated into the internet of vehicles communications apparatus, or may be a device or a module independent of the internet of vehicles communications apparatus.

Optionally, the positioning information is carried in a BSM.

When the positioning information is carried in the BSM, the internet of vehicles communications apparatus may send the BSM to a device such as another vehicle (a vehicle other than the first vehicle) or a road side unit, so that the device such as the another vehicle or the road side unit can determine a current position of the first vehicle based on the BSM.

Optionally, the positioning information is carried in a roadside safety message (RSM).

When the positioning information is carried in the RSM, the internet of vehicles communications apparatus may send the RSM to the road side unit, and the road side unit can determine the current position of the first vehicle based on the RSM.

Optionally, the internet of vehicles communications apparatus sends the positioning information to the another device in a broadcast or unicast manner.

The another device may be a network device installed in the road side unit or an internet of vehicles system, or a device in the another vehicle. Alternatively, the another device may be a mobile terminal.

It should be understood that the internet of vehicles communications apparatus may alternatively separately send the positioning position of the positioning unit of the vehicle and the offset distance of the positioning unit relative to the positioning reference point of the first vehicle to the another device. In other words, the positioning position of the positioning unit and the offset distance of the positioning unit relative to the positioning reference point of the first vehicle may be carried in a same piece of information, or may be separately carried in two pieces of independent information.

Optionally, the internet of vehicles communications apparatus generates positioning position information of the positioning unit of the first vehicle and offset distance information of the positioning unit relative to the positioning reference point of the first vehicle. The internet of vehicles communications apparatus sends the positioning position information of the positioning unit and the offset distance information of the positioning unit relative to the positioning reference point of the first vehicle to the another device.

When sending the positioning position information of the positioning unit and the offset distance information of the positioning unit relative to the positioning reference point of the first vehicle to the another device, the internet of vehicles communications apparatus may simultaneously send these two types of information, or may sequentially send these two types of information.

The offset distance of the positioning unit relative to the positioning reference point of the first vehicle may be determined based on a size of the vehicle and an installation position of the positioning unit before the first vehicle is delivered from a factory (specifically, the offset distance may be calculated based on a known size of the first vehicle, or may be directly measured by a measuring tool). The offset distance of the positioning unit relative to the positioning reference point of the first vehicle may be written into a configuration file of the first vehicle before delivery. When the internet of vehicles communications apparatus in the first vehicle generates the positioning information, the offset distance of the positioning unit relative to the positioning reference point of the first vehicle may be extracted from the configuration file and written into the positioning information of the first vehicle.

Optionally, when a distribution position of the positioning unit of the first vehicle in the first vehicle changes, the offset distance of the positioning unit of the first vehicle relative to the positioning reference point of the first vehicle may be modified through a third-party apparatus.

Optionally, the first vehicle may have a human-machine interaction interface. When the distribution position of the positioning unit of the first vehicle in the first vehicle changes, the offset distance of the positioning unit of the first vehicle relative to the positioning reference point of the first vehicle may be modified through the human-computer interaction interface of the first vehicle.

It should be understood that the distribution position of the positioning unit of the first vehicle in the first vehicle changes may mean that the size of the first vehicle remains unchanged, but a distance between the positioning unit of the first vehicle and the positioning reference point of the first vehicle deviates, or may mean that the distance between the positioning unit of the first vehicle and the positioning reference point of the vehicle changes due to a change in the vehicle size of the first vehicle.

In this application, the positioning information includes both the positioning position of the positioning unit and an offset distance of the positioning unit relative to a reference point. Therefore, an accurate position of an entire vehicle body of the first vehicle (or a vehicle outline of the first vehicle) may be determined based on the positioning information. This can improve positioning precision.

Specifically, after the positioning information of the first vehicle is obtained, the positioning position of the positioning unit of the first vehicle may be determined based on the positioning information. Then, obtained size information of the first vehicle and obtained offset distance of the positioning unit relative to the reference point in the positioning information are combined, to relatively accurately determine the accurate position of the entire vehicle body of the first vehicle or the vehicle outline of the first vehicle.

In some implementations of the first aspect, the positioning reference point is a geometric center of the first vehicle.

The geometric center of the first vehicle may be an intersection point of a longitudinal centerline of the first vehicle and a transverse centerline of the first vehicle.

Alternatively, when an outline (mainly an outline formed in a length direction and a width direction of the vehicle) of the first vehicle is a rectangle, the geometric center of the first vehicle may be an intersection point of diagonals of the rectangle (a length of the rectangle is equal to a length of the first vehicle, and a width of the rectangle is equal to a width of the first vehicle) formed by the outline of the first vehicle.

Alternatively, when the outline of the first vehicle is not a rectangle, the geometric center of the first vehicle may be an intersection point of diagonals of a rectangle tangent (or approximately tangent or similarly tangent, and a specific tangent form may be that the outline is tangent to an outer side of the rectangle) to the outline of the first vehicle.

In some implementations of the first aspect, the positioning reference point is a vertex of a reference rectangle, or the positioning reference point is an intersection point of the reference rectangle and the longitudinal centerline of the first vehicle, or the positioning reference point is an intersection point of the reference rectangle and the transverse centerline of the first vehicle.

It should be understood that the reference rectangle may be a rectangle determined in a process of determining the positioning reference point. After the reference rectangle is obtained based on the outline or the size of the vehicle, some points of the reference rectangle may be selected as positioning reference points.

The reference rectangle is the rectangle that is tangent, approximately tangent, or similarly tangent to the outline of the first vehicle. Specifically, the reference rectangle may be tangent to an outer side of the outline of the first vehicle (in other words, the outline of the first vehicle is inside the reference rectangle and tangent to the reference rectangle).

It should be understood that the positioning reference point is the vertex of the reference rectangle specifically means that the positioning reference point may be any one of four vertexes of the reference rectangle. That the positioning reference point is the intersection point of the reference rectangle and the longitudinal centerline of the first vehicle specifically means that the positioning reference point is any one of two intersection points of the reference rectangle and the longitudinal centerline of the first vehicle. That the positioning reference point is the intersection point of the reference rectangle and the transverse centerline of the first vehicle may specifically mean that the positioning reference point may be any one of two intersection points of the reference rectangle and the transverse centerline of the first vehicle.

It should further be understood that, in an internet of vehicles communications standard, when performing internet of vehicles communication, different vehicles may select a fixed position of the vehicle as a reference point, to subsequently determine a position of a vehicle body of the vehicle.

For example, in the internet of vehicles communications standard, a geometric center of the vehicle may be selected as a positioning reference point of the vehicle. In this way, after positioning information of any vehicle is obtained, an accurate position of a vehicle body of the vehicle is determined by using a center point of the vehicle as a reference point.

In some implementations of the first aspect, a length of the reference rectangle is the same as the length of the first vehicle, and a width of the reference rectangle is the same as the width of the first vehicle.

In some implementations of the first aspect, the length of the first vehicle is a straight-line distance from a foremost end of a head of the first vehicle to a rearmost end of a tail of the first vehicle, and the width of the first vehicle is a straight-line distance from a most protruding position on a left side of the first vehicle to a most protruding position on a right side of the first vehicle.

Optionally, the width of the first vehicle may also be considered as a distance between two planes that are parallel to a longitudinal symmetric plane of the first vehicle and that separately abut against fixed protruding parts on two sides of the first vehicle. Simply, the width of the first vehicle is a distance between two extreme points in the width direction of the first vehicle.

The "fixed protruding parts on the two sides" do not include the following parts of the first vehicle: rear view mirrors (which may also be referred to as reflectors, and are located in a left front part and a right front part of the vehicle), a side identification light, a position indicating light, a direction indicator, a mud guard, and deformation of a contact part between a tire and the ground.

In some implementations of the first aspect, the offset distance of the positioning unit relative to the positioning reference point of the first vehicle includes an offset value of the positioning unit relative to the positioning reference point in a first direction and an offset value of the positioning unit relative to the positioning reference point in a second direction. The first direction is a direction of the longitudinal centerline of the first vehicle. The second direction is perpendicular to the first direction.

In some implementations of the first aspect, the positioning position of the positioning unit includes a longitude and a latitude of the positioning unit.

In some implementations of the first aspect, a resolution of the offset distance of the positioning unit relative to the positioning reference point of the first vehicle is 1 cm.

A relatively low resolution is set, so that a position of the entire vehicle body of the first vehicle or the vehicle outline of the first vehicle can be more accurately determined based on the positioning information.

In some implementations of the first aspect, the positioning information further includes vehicle size information of the first vehicle.

Optionally, the vehicle size information of the first vehicle includes at least one of the length, the width, or a height of the first vehicle.

The length of the first vehicle may be the straight-line distance from the foremost end of the head of the first vehicle to the rearmost end of the tail of the first vehicle. The width of the first vehicle may be the straight-line distance from the most protruding position on the left side of the first vehicle to the most protruding position on the right side of the first vehicle. The height of the first vehicle may be a vertical distance from the ground on which the first vehicle is located to a highest point on a roof of the first vehicle when the first vehicle is on a horizontal road surface and the tire is inflated at a standard tire pressure specified by a manufacturer.

In this application, the vehicle size information of the first vehicle in the positioning information can be used to determine accuracy of the offset distance of the positioning unit in the positioning information of the first vehicle relative to the positioning reference point of the first vehicle, to obtain reliable information based on the positioning information.

In some implementations of the first aspect, the positioning information further includes motion information of the first vehicle.

Optionally, the motion information of the first vehicle includes at least one piece of information such as a speed of the first vehicle, an acceleration of the first vehicle, and a steering angle of the first vehicle.

In this application, when the positioning information includes the motion information of the first vehicle, after obtaining the positioning information, the another vehicle can learn a motion status of the first vehicle based on the positioning information of the first vehicle, to further determine a safe distance from the first vehicle.

Alternatively, when the positioning information includes the motion information of the first vehicle, the another vehicle can control (for example, accelerate, decelerate, or turn) the another vehicle after obtaining the positioning information.

In addition, when the positioning information includes the motion information of the first vehicle, the another device (for example, the road side unit) can perform auxiliary control on a signal light based on obtained positioning information.

It should be understood that, in addition to information including the positioning position of the positioning unit of the first vehicle and the offset distance of the positioning unit relative to the positioning reference point of the first vehicle, the positioning information may alternatively be information that specifically indicates a position of the first vehicle.

Optionally, the positioning information of the first vehicle includes a position of a vehicle standard point of the first vehicle.

It should be understood that the position of the vehicle standard point of the first vehicle is a current positioning position of the vehicle standard point, but is not a specific distribution position of the vehicle standard point inside the first vehicle. A positioning position of the vehicle standard point may be indicated by a longitude and a latitude of the vehicle standard point.

The vehicle standard point of the first vehicle may be the geometric center of the first vehicle.

When the positioning information includes the position of the vehicle standard point of the first vehicle, the positioning information may be obtained through calculation based on the positioning position of the positioning unit of the first vehicle and the offset distance of the positioning unit relative to the positioning reference point of the first vehicle.

In this application, when the positioning information of the first vehicle includes the position of the vehicle standard point of the first vehicle, after obtaining the positioning information of the first vehicle, the another device can determine a specific position of the vehicle body of the first vehicle based on the positioning information of the first vehicle and the size of the first vehicle.

Optionally, the positioning information of the first vehicle includes positions of vertexes around the first vehicle or a position of the vertex of the reference rectangle.

Further, in addition to positions of vertexes A, B, C, and D of the reference rectangle, the positioning information of the first vehicle may further include positions of midpoints of some rectangular sides of the reference rectangle.

When the positioning information includes the positions of the vertexes around the first vehicle or the position of the vertex of the reference rectangle, the positioning information may be obtained through calculation based on the positioning position of the positioning unit of the first vehicle and the offset distance of the positioning unit relative to the positioning reference point of the first vehicle.

In this application, when the positioning information of the first vehicle includes a midpoint of a rectangular side of the reference rectangle, after obtaining the positioning information of the first vehicle, the another vehicle or device can calibrate the position of the vertex of the reference rectangle based on a position of the midpoint of the rectangular side of the reference rectangle, to obtain the accurate position of the vehicle body of the first vehicle.

It should be understood that the positioning information sent by the internet of vehicles communications apparatus may be the information including the positioning position of the positioning unit of the first vehicle and the offset distance of the positioning unit relative to the positioning reference point of the first vehicle, or information including the position of the vehicle standard point of the first vehicle, or information including the positions of the vertexes around the first vehicle or the position of the vertex of the reference rectangle. In actual application, the internet of vehicles communications apparatus may select positioning information in one of the forms and send the positioning information to the another device.

According to a second aspect, an internet of vehicles positioning method is provided. The method includes: An internet of vehicles communications apparatus installed in a road side unit or a second vehicle (the second vehicle is another vehicle other than a first vehicle) receives positioning information sent by the first vehicle. The positioning information includes a positioning position of a positioning unit of the first vehicle and an offset distance of the positioning unit relative to a positioning reference point of the first vehicle. The internet of vehicles communications apparatus determines a position of the first vehicle based on the positioning information.

The internet of vehicles communications apparatus in the second aspect may obtain the positioning information of the first vehicle through a broadcast message or a unicast message.

Optionally, the positioning information in the second aspect is carried in a BSM.

When the positioning information in the second aspect is carried in the BSM, the internet of vehicles communications apparatus in the second aspect may be an apparatus installed in the road side unit or the second vehicle, and the internet of vehicles communications apparatus can determine a current position of the first vehicle based on the BSM.

Optionally, the positioning information in the second aspect is carried in an RSM.

When the positioning information in the second aspect is carried in the RSM, the internet of vehicles communications apparatus in the second aspect may be the apparatus installed in the road side unit, and the internet of vehicles communications apparatus can determine the current position of the first vehicle based on the RSM.

In this application, the positioning information includes both the positioning position of the positioning unit and an offset distance of the positioning unit relative to a reference point. Therefore, an accurate position of an entire vehicle body of the first vehicle (or a vehicle outline of the first vehicle) may be determined based on the positioning information. This can improve positioning precision.

Specifically, after obtaining the positioning information of the first vehicle, the internet of vehicles communications apparatus may determine the positioning position of the positioning unit of the first vehicle based on the positioning information. Then, obtained size information of the first vehicle and obtained offset distance of the positioning unit relative to the reference point in the positioning information are combined, to relatively accurately determine the accurate position of the entire vehicle body of the first vehicle or the vehicle outline of the first vehicle.

In some implementations of the second aspect, the positioning reference point is a geometric center of the first vehicle.

The geometric center of the first vehicle may be an intersection point of a longitudinal centerline of the first vehicle and a transverse centerline of the first vehicle.

It should be understood that the positioning reference point may be any one of four vertexes of a reference rectangle. Alternatively, the positioning reference point may be any one of two intersection points of the reference rectangle and the longitudinal centerline of the first vehicle. Alternatively, the positioning reference point may be any one of two intersection points of the reference rectangle and the transverse centerline of the first vehicle.

In some implementations of the second aspect, the positioning reference point is a vertex of the reference rectangle. Alternatively, the positioning reference point is an intersection point of the reference rectangle and the longitudinal centerline of the first vehicle. Alternatively, the positioning reference point is an intersection point of the reference rectangle and the transverse centerline of the first vehicle. The reference rectangle is a rectangle formed by line segments tangent to an outline of the first vehicle.

In some implementations of the second aspect, a length of the reference rectangle is the same as a length of the first vehicle, and a width of the reference rectangle is the same as a width of the first vehicle.

Optionally, the width of the first vehicle may also be considered as a distance between two planes that are parallel to a longitudinal symmetric plane of the first vehicle and that separately abut against fixed protruding parts on two sides of the first vehicle. Simply, the width of the first vehicle is a distance between two extreme points in a width direction of the first vehicle.

The "fixed protruding parts on the two sides" do not include the following parts of the first vehicle: rear view mirrors (which may also be referred to as reflectors, and are located in a left front part and a right front part of the vehicle), a side identification light, a position indicating light, a direction indicator, a mud guard, and deformation of a contact part between a tire and the ground.

In some implementations of the second aspect, the length of the first vehicle is a straight-line distance from a foremost end of a head of the first vehicle to a rearmost end of a tail of the first vehicle, and the width of the first vehicle is a straight-line distance from a most protruding position on a left side of the first vehicle to a most protruding position on a right side of the first vehicle.

In some implementations of the second aspect, the offset distance of the positioning unit relative to the positioning reference point of the first vehicle includes an offset value of the positioning unit relative to the positioning reference point in a first direction and an offset value of the positioning unit relative to the positioning reference point in a second direction. The first direction is a direction of the longitudinal centerline of the first vehicle. The second direction is perpendicular to the first direction.

In some implementations of the second aspect, the positioning position of the positioning unit includes a longitude and a latitude of the positioning unit.

In some implementations of the second aspect, a resolution of the offset distance of the positioning unit relative to the positioning reference point of the first vehicle is 1 cm.

A relatively low resolution is set, so that a position of the entire vehicle body or the vehicle outline of the first vehicle can be more accurately determined based on the positioning information.

In some implementations of the second aspect, the positioning information further includes vehicle size information of the first vehicle.

Optionally, the vehicle size information of the first vehicle includes at least one of the length, the width, or a height of the first vehicle.

The length of the first vehicle may be the straight-line distance from the foremost end of the head of the first vehicle to the rearmost end of the tail of the first vehicle. The width of the first vehicle may be the straight-line distance from the most protruding position on the left side of the first vehicle to the most protruding position on the right side of the first vehicle. The height of the first vehicle may be a vertical distance from the ground on which the first vehicle is located to a highest point on a roof of the first vehicle when the first vehicle is on a horizontal road surface and the tire is inflated at a standard tire pressure specified by a manufacturer.

In some implementations of the second aspect, the positioning information further includes motion information of the first vehicle.

Optionally, the motion information of the first vehicle includes at least one piece of information such as a speed of the first vehicle, an acceleration of the first vehicle, and a steering angle of the first vehicle.

When the positioning information includes the motion information of the first vehicle, a motion status of the first vehicle can be determined based on the motion information in the positioning information.

It should be understood that, in addition to information including the positioning position of the positioning unit of the first vehicle and the offset distance of the positioning unit relative to the positioning reference point of the first vehicle, the positioning information may alternatively be information that specifically indicates the position of the first vehicle.

Optionally, the positioning information of the first vehicle includes a position of a vehicle standard point of the first vehicle.

It should be understood that the position of the vehicle standard point of the first vehicle is a current positioning position of the vehicle standard point, but is not a specific distribution position of the vehicle standard point inside the first vehicle. A positioning position of the vehicle standard point may be indicated by a longitude and a latitude of the vehicle standard point.

The vehicle standard point of the first vehicle may be the geometric center of the first vehicle.

When the positioning information includes the position of the vehicle standard point of the first vehicle, the positioning information may be obtained through calculation based on the positioning position of the positioning unit of the first vehicle and the offset distance of the positioning unit relative to the positioning reference point of the first vehicle.

In this application, when the positioning information of the first vehicle includes the position of the vehicle standard point of the first vehicle, after receiving the positioning information, the internet of vehicles communications apparatus in the second vehicle or the road side unit can determine a specific position of the vehicle body of the first vehicle based on the positioning information of the first vehicle and a size of the first vehicle.

Optionally, the positioning information of the first vehicle includes positions of vertexes around the first vehicle or a position of the vertex of the reference rectangle.

Further, in addition to positions of vertexes A, B, C, and D of the reference rectangle, the positioning information of the first vehicle may further include positions of midpoints of some rectangular sides of the reference rectangle.

In this application, when the positioning information of the first vehicle includes a midpoint of a rectangular side of the reference rectangle, after receiving the positioning information of the first vehicle, the internet of vehicles communications apparatus can calibrate the position of the vertex of the reference rectangle based on a position of the midpoint of the rectangular side of the reference rectangle, to obtain the accurate position of the vehicle body of the first vehicle.

It should be understood that the positioning information received by the internet of vehicles communications apparatus in the second aspect may be the information including the positioning position of the positioning unit of the first vehicle and the offset distance of the positioning unit relative to the positioning reference point of the first vehicle, or information including the position of the vehicle standard point of the first vehicle, or information including the positions of the vertexes around the first vehicle or the position of the vertex of the reference rectangle. In actual application, the positioning information received by the internet of vehicles communications apparatus may be positioning information in one of the forms.

According to a third aspect, an internet of vehicles communications apparatus is provided. The internet of vehicles communications apparatus includes a module configured to perform the method according to the first aspect or any implementation of the first aspect.

According to a fourth aspect, an internet of vehicles communications apparatus is provided. The internet of vehicles communications apparatus includes a module configured to perform the method according to the second aspect or any implementation of the second aspect.

According to a fifth aspect, an internet of vehicles communications apparatus is provided, including a transceiver and a processor. The transceiver and the processor are configured to perform the method according to the first aspect or any implementation of the first aspect.

Optionally, the internet of vehicles communications apparatus further includes a memory. The memory is configured to store a program. The processor is configured to execute the program. When the program is executed, the transceiver and the processor are configured to perform the method according to the first aspect or any implementation of the first aspect.

The processor may be a central processing unit (CPU), or some dedicated chips with a data processing function, or a field programmable gate array (FPGA), or the like.

In addition, the processor may alternatively be a CPU plus a dedicated chip, or a CPU plus an FPGA, or a CPU plus a dedicated chip plus an FPGA.

According to a sixth aspect, an internet of vehicles communications apparatus is provided, including a transceiver and a processor. The transceiver and the processor are configured to perform the method according to the second aspect or any implementation of the second aspect.

Optionally, the internet of vehicles communications apparatus further includes a memory. The memory is configured to store a program. The processor is configured to execute the program. When the program is executed, the transceiver and the processor are configured to perform the method according to the second aspect or any implementation of the second aspect.

The processor may be a CPU, or some dedicated chips with a data processing function, or an FPGA, or the like.

In addition, the processor may alternatively be a CPU plus a dedicated chip, or a CPU plus an FPGA, or a CPU plus a dedicated chip plus an FPGA.

According to a seventh aspect, a computer-readable storage medium is provided. The computer-readable medium storage medium is configured to store program code. When the program code is executed by a computer, the computer is configured to perform the method according to the first aspect or any implementation of the first aspect.

According to an eighth aspect, a computer-readable storage medium is provided. The computer-readable medium storage medium is configured to store program code. When the program code is executed by a computer, the computer is configured to perform the method according to the second aspect or any implementation of the second aspect.

According to a ninth aspect, a chip is provided. The chip includes a transceiver and a processor. The transceiver and the processor are configured to perform the method according to the first aspect or any implementation of the first aspect.

According to a tenth aspect, a chip is provided. The chip includes a transceiver and a processor. The transceiver and the processor are configured to perform the method according to the second aspect or any implementation of the second aspect.

According to an eleventh aspect, a computer program (or referred to as a computer program product) used to enable a computer or an internet of vehicles communications apparatus to perform the method according to the first aspect or any implementation of the first aspect is provided.

According to a twelfth aspect, a computer program (or referred to as a computer program product) used to enable a computer or an internet of vehicles communications apparatus to perform the method according to the second aspect or any implementation of the second aspect is provided.

## BRIEF DESCRIPTION OF DRAWINGS

FIG. 1 is a schematic flowchart of an internet of vehicles communication method according to an embodiment of this application;

FIG. 2 is a schematic diagram of a positioning reference point in a first vehicle according to an embodiment of this application;

FIG. 3 is a schematic diagram of a positioning reference point in a first vehicle according to an embodiment of this application;

FIG. 4 is a schematic flowchart of an internet of vehicles positioning method according to an embodiment of this application;

FIG. 5 is a schematic diagram of a left turn assist scenario according to an embodiment of this application;

FIG. 6 is a flowchart of left turn assist according to an embodiment of this application;

FIG. 7 is a schematic diagram of a related distance in a left turn assist scenario according to an embodiment of this application;

FIG. 8 is a schematic diagram of a lane change assist scenario according to an embodiment of this application;

FIG. 9 is a flowchart of lane change assist according to an embodiment of this application;

FIG. 10 is a schematic block diagram of an internet of vehicles communications apparatus according to an embodiment of this application;

FIG. 11 is a schematic block diagram of an internet of vehicles communications apparatus according to an embodiment of this application;

FIG. 12 is a schematic block diagram of an internet of vehicles communications apparatus according to an embodiment of this application; and

FIG. 13 is a schematic block diagram of an internet of vehicles communications apparatus according to an embodiment of this application.

## DESCRIPTION OF EMBODIMENTS

The following describes technical solutions of this application with reference to accompanying drawings.

In a conventional solution, positioning information transmitted between different vehicles or between a vehicle and another device includes a positioning position of a positioning unit of the vehicle. Because vehicle models and vehicle sizes of different vehicles vary greatly, the positioning unit of the vehicle is not necessarily located at a standard point (for example, a geometric center of the vehicle) of the vehicle. In the conventional solution, after positioning information of the vehicle is obtained, a position of the positioning unit of the vehicle is usually used as a position of the vehicle. In this way, it is difficult to accurately determine a specific position of the vehicle based on the positioning information.

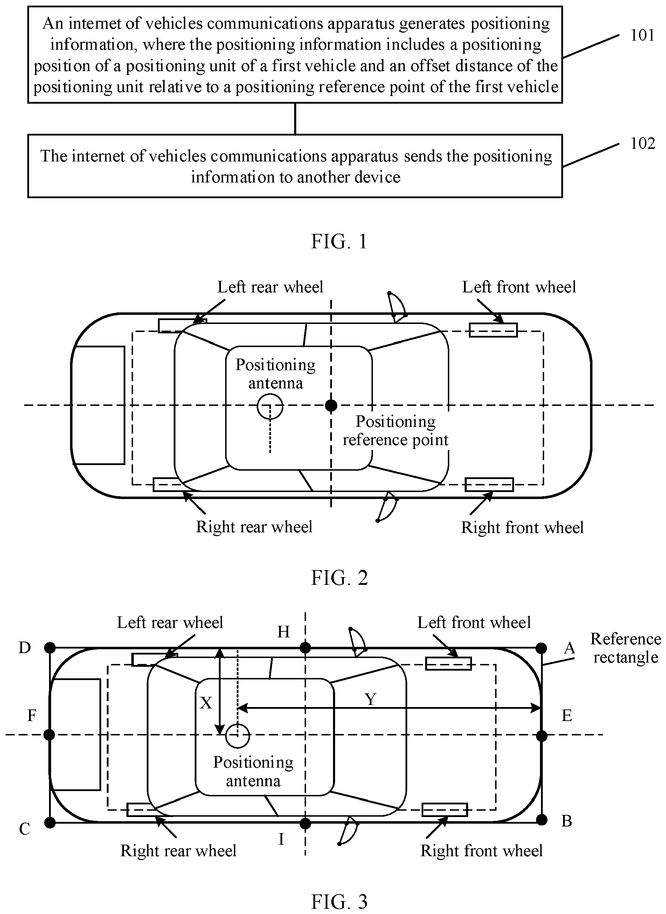

Therefore, in internet of vehicles communication, to obtain more accurate positioning information of a vehicle based on positioning information, this application provides a new internet of vehicles communication method. In the method, position distribution information of a positioning unit in the vehicle is added to the positioning information of the vehicle. In this way, after obtaining the positioning information of the vehicle, another device (the another device may be an internet of vehicles communications apparatus installed in another vehicle other than the vehicle, and the another device may be a road side unit) can obtain a specific position of the vehicle based on the positioning information. The following describes in detail an internet of vehicles communication method according to an embodiment of this application with reference to FIG. 1.

FIG. 1 is a schematic flowchart of the internet of vehicles communication method according to this embodiment of this application. The method shown in FIG. 1 may be performed by an internet of vehicles communications apparatus installed in a first vehicle. The method shown in FIG. 1 includes step 101 and step 102, and the following describes step 101 and step 102 in detail.

101: The internet of vehicles communications apparatus generates positioning information, where the positioning information includes a positioning position of a positioning unit of the first vehicle and an offset distance of the positioning unit relative to a positioning reference point of the first vehicle.

In step 101, the internet of vehicles communications apparatus is an apparatus installed in the first vehicle.

The positioning unit of the first vehicle may be an apparatus or a module, in the first vehicle, that is configured to position a current position. The positioning unit may be specifically a positioning antenna or the like. The positioning position of the positioning unit may be indicated by a longitude and a latitude of the positioning unit. In addition, the positioning unit may be integrated into the internet of vehicles communications apparatus, or may be a device or a module independent of the internet of vehicles communications apparatus.

Optionally, the positioning information is carried in a BSM.

When the positioning information is carried in the BSM, the internet of vehicles communications apparatus may send the BSM to a device such as another vehicle or a road side unit, so that the device such as the another vehicle or the road side unit can determine the current position of the first vehicle based on the BSM.

Optionally, the positioning information is carried in an RSM.

When the positioning information is carried in the RSM, the internet of vehicles communications apparatus may send the RSM to the road side unit, and the road side unit can determine the current position of the first vehicle based on the RSM.

The offset distance of the positioning unit relative to the positioning reference point of the first vehicle may be determined based on a size of the first vehicle and an installation position of the positioning unit before the first vehicle is delivered from a factory (specifically, the offset distance may be calculated based on a known size of the first vehicle, or may be directly measured by a measuring tool). The offset distance of the positioning unit relative to the positioning reference point of the first vehicle may be written into a configuration file of the first vehicle before delivery. When the internet of vehicles communications apparatus in the first vehicle generates the positioning information, the offset distance of the positioning unit relative to the positioning reference point of the first vehicle may be extracted from the configuration file and written into the positioning information of the first vehicle.

Optionally, when a distribution position of the positioning unit of the first vehicle in the first vehicle changes, the offset distance of the positioning unit of the first vehicle relative to the positioning reference point of the first vehicle may be modified through a third-party apparatus.

Optionally, the first vehicle may have a human-machine interaction interface. When the distribution position of the positioning unit of the first vehicle in the first vehicle changes, the offset distance of the positioning unit of the first vehicle relative to the positioning reference point of the first vehicle may be modified through the human-computer interaction interface of the first vehicle.

It should be understood that the distribution position of the positioning unit of the first vehicle in the first vehicle changes may mean that the size of the first vehicle remains unchanged, but a distance between the positioning unit of the first vehicle and the positioning reference point of the first vehicle deviates, or may mean that the distance between the positioning unit of the first vehicle and the positioning reference point of the vehicle changes due to a change in the vehicle size of the first vehicle.

Before step 101, the internet of vehicles communications apparatus may first obtain the positioning position of the positioning unit of the first vehicle.

Specifically, the internet of vehicles communications apparatus may obtain (in real time) the positioning position of the positioning unit from the positioning unit, and then perform step 101 to generate the positioning information.

There is a plurality of manners of obtaining the positioning position of the positioning unit of the first vehicle. For example, the positioning position of the positioning unit may be determined through a global navigation satellite system (GNSS) positioning method. In addition to the GNSS positioning method, another positioning method (for example, inertial positioning or point cloud positioning) may alternatively be used to determine the positioning position of the positioning unit. A positioning system used when the GNSS positioning method is used for positioning may be a global positioning system (GPS) of the United States, a BeiDou satellite navigation system (BeiDou navigation satellite system, BDS) of China, a Galileo satellite navigation system of Europe, and a GLONASS positioning system (GLONASS for short in Russian) of Russia.

Optionally, the positioning reference point is a geometric center of the first vehicle.

The geometric center of the first vehicle may be an intersection point of a longitudinal centerline of the first vehicle and a transverse centerline of the first vehicle.

Alternatively, when an outline (mainly an outline formed in a length direction and a width direction of the first vehicle) of the first vehicle is a rectangle, the geometric center of the first vehicle may be an intersection point of diagonals of the rectangle (a length of the rectangle is equal to a length of the first vehicle, and a width of the rectangle is equal to a width of the first vehicle) formed by the outline of the first vehicle.

Alternatively, when the outline of the first vehicle is not a rectangle, the geometric center of the first vehicle may be an intersection point of diagonals of a rectangle tangent (or approximately tangent or similarly tangent, and a specific tangent form may be that the outline is tangent to an outer side of the rectangle) to the outline of the first vehicle.

As shown in FIG. 2, the intersection point of the longitudinal centerline of the first vehicle and the transverse centerline of the first vehicle is the geometric center of the first vehicle, and is a black dot in the figure. The geometric center may be used as the positioning reference point.

It should be understood that the reference rectangle may be a rectangle determined in a process of determining the positioning reference point. After the reference rectangle is obtained based on the outline or the size of the first vehicle, some points of the reference rectangle may be selected as positioning reference points.

The reference rectangle is the rectangle that is tangent, approximately tangent, or similarly tangent to the outline of the first vehicle. Specifically, the reference rectangle may be tangent to an outer side of the outline of the first vehicle (in other words, the outline of the first vehicle is inside the reference rectangle and tangent to the reference rectangle).

Optionally, the width of the first vehicle may also be considered as a distance between two planes that are parallel to a longitudinal symmetric plane of the first vehicle and that separately abut against fixed protruding parts on two sides of the first vehicle. Simply, the width of the first vehicle is a distance between two extreme points in the width direction of the first vehicle.

The "fixed protruding parts on the two sides" do not include the following parts of the first vehicle: rear view mirrors (which may also be referred to as reflectors, and are located in a left front part and a right front part of the first vehicle), a side identification light, a position indicating light, a direction indicator, a mud guard, and deformation of a contact part between a tire and the ground.

As shown in FIG. 3, the reference rectangle is a rectangle formed by line segments tangent to the outline of the first vehicle. The reference rectangle is tangent to arc edges of the first vehicle (the arc edges are located in a left front, a left rear, a left rear, and a right rear of the first vehicle). A length of the reference rectangle is the same as the length of the first vehicle. A width of the reference rectangle is the same as the width of the first vehicle. Vertexes of the reference rectangle are A, B, C, and D. A center point of the reference rectangle is the intersection point between the longitudinal centerline of the first vehicle and the transverse centerline of the first vehicle.

As shown in FIG. 3, the positioning reference point of the first vehicle may be any one of the vertexes A, B, C, and D of the reference rectangle. Alternatively, the positioning reference point of the first vehicle may be any one of intersection points E and F of the reference rectangle and the longitudinal centerline of the first vehicle. Alternatively, the positioning reference point of the first vehicle may be any one of intersection points H and I of the reference rectangle and the transverse centerline of the first vehicle.

102: The internet of vehicles communications apparatus sends the positioning information to another device.

The another device in step 102 may be a communications device installed in the road side unit (RSU) or the another vehicle.

Optionally, in step 102, the internet of vehicles communications apparatus sends the positioning information to the another device in a broadcast or unicast manner.

In this application, the positioning information carries the positioning unit of the first vehicle and offset information of the positioning unit relative to the first vehicle. Therefore, after obtaining the positioning information of the first vehicle, the another device can determine an accurate position of the first vehicle based on the positioning information of the first vehicle.

The positioning information may be carried in the BSM. The BSM may also be referred to as a Msg_BSM message. A definition of the Msg_BSM message may be shown in Table 1.

**Table 1**

BasicSafetyMessage ::= SEQUENCE {

    msgCnt MsgCount,

    id OCTET STRING (SIZE(8)),

    -- vehicle ID

    -- can be temperary or fixed

    plateNo OCTET STRING (SIZE(16)) OPTIONAL,

    -- Reserved for Electronic Vehicle Identification

    secMark DSecond,

    lat Latitude,

    long Longitude,

    elev Elevation,

    accuracy PositionConfidenceSet,

    transmission TransmissionState,

    **antOffset AntennaOffset,**

    speed Speed,

```
        heading Heading,

        angle SteeringWheelAngle,

        motionCfd MotionConfidenceSet OPTIONAL,

        accelSet AccelerationSet4Way,

        brakes BrakeSystemStatus,

        size VehicleSize,

        vehicleClass VehicleClassification,

        -- VehicleClassification includes BasicVehicleClass and other extendible type

        safetyExt VehicleSafetyExtensions OPTIONAL,

        …

    }
```

In Table 1, AntennaOffset indicates the offset distance of the positioning unit of the first vehicle relative to the positioning reference point of the first vehicle.

Optionally, the first vehicle may further send the positioning information of the first vehicle to another device, and the positioning information is used to indicate a position of a vehicle body of the first vehicle.

The positioning information of the first vehicle may include a position of a vehicle standard point of the first vehicle.

In this application, after obtaining the positioning information of the first vehicle, the another vehicle can determine a specific position of the vehicle body of the first vehicle based on the positioning information of the first vehicle and the size of the first vehicle.

For example, the vehicle standard point of the first vehicle may be the geometric center of the first vehicle.

When the positioning information of the first vehicle includes a position of the geometric center of the first vehicle, position information of the first vehicle may further include distance between the geometric center of the first vehicle and a side tangent (a left-side tangent of the first vehicle or a right-side tangent of the first vehicle, which is equivalent to a line segment AD or a line segment BC in the reference rectangle in FIG. 3) of the first vehicle, and a distance between the geometric center of the first vehicle and a head tangent (which is equivalent to a line segment AB in FIG. 3) or a tail tangent (which is equivalent to a line segment CD in FIG. 3) of the first vehicle. In this way, after receiving the positioning information of the first vehicle, the another vehicle or device can directly determine the position of the vehicle body of the first vehicle based on the position of the geometric center of the first vehicle and a distance between the geometric center and the first vehicle.

Optionally, the positioning information of the first vehicle may include positions of vertexes around the first vehicle or a position of a vertex of the reference rectangle.

It should be understood that the position of the vertex of the reference rectangle may be specifically a longitude and a latitude of each vertex of the reference rectangle.

Specifically, as shown in FIG. 3, the positioning information of the first vehicle may include positions of the vertexes A, B, C, and D of the reference rectangle.

For example, the positioning information of the first vehicle may include a position $(M_A, N_A)$ of the vertex A, a position $(M_B, N_B)$ of the vertex B, a position $(M_C, N_C)$ of the vertex C, and a position $(M_D, N_D)$ of the vertex D. $M_A$ and $N_A$ respectively indicate a longitude and a latitude of the vertex A (a meaning of coordinates of another vertex is similar). In this way, after obtaining the positioning information of the first vehicle, the another vehicle or device can directly determine the positions of the vertexes A, B, C, and D of the reference rectangle that is tangent to the outline of the first vehicle. In other words, the position of the vehicle body of the first vehicle is directly determined.

Further, in addition to the positions of the vertexes A, B, C, and D of the reference rectangle, the positioning information of the first vehicle may further include positions of midpoints of some rectangular sides of the reference rectangle.

For example, as shown in FIG. 3, the positioning information of the first vehicle may further include a position

**EP 3 860 161 A1**

of any one of midpoints H, I, E, and F of a rectangular side of the reference rectangle.

When the positioning information of the first vehicle includes a midpoint of a rectangular side of the reference rectangle, after obtaining the positioning information of the first vehicle, the another vehicle or device can calibrate the position of the vertex of the reference rectangle based on a position of the midpoint of the rectangular side of the reference rectangle, to obtain an accurate position of the vehicle body of the first vehicle.

The positioning information of the first vehicle may be obtained through calculation based on position information of the positioning unit of the first vehicle and the offset distance of the positioning unit relative to the positioning reference point of the first vehicle.

For example, when the positioning information of the first vehicle includes the position of the vehicle standard point of the first vehicle, the position of the standard point of the first vehicle may be calculated based on the positioning position of the positioning unit of the first vehicle and the offset distance of the positioning unit relative to the positioning reference point of the first vehicle.

For another example, when the positioning information of the first vehicle includes the position of the vertex of the reference rectangle, the positions of the vertexes A, B, C, and D of the reference rectangle may be calculated based on the positioning position of the positioning unit of the first vehicle and the offset distance of the positioning unit relative to the positioning reference point of the first vehicle.

Optionally, in an embodiment, the offset distance of the positioning unit relative to the positioning reference point of the first vehicle includes an offset value of the positioning unit relative to the reference point in a first direction and an offset value of the positioning unit relative to the reference point in a second direction. The first direction is a direction of the longitudinal centerline of the first vehicle. The second direction is perpendicular to the first direction.

As shown in FIG. 3, the first direction is the direction of the longitudinal centerline of the first vehicle, and the second direction is a direction of the transverse centerline of the first vehicle. The offset value of the positioning unit relative to the positioning reference point of the first vehicle in the first direction is Y. The offset value of the positioning unit relative to the positioning reference point of the first vehicle in the second direction is X.

Optionally, in an embodiment, a resolution of the offset distance of the positioning unit relative to the positioning reference point of the first vehicle is 1 cm.

The first direction may also be referred to as a longitudinal direction of the first vehicle. The second direction may also be referred to as a transverse direction of the first vehicle.

For example, when the positioning reference point of the first vehicle is an intersection point (equivalent to the vertex A of the reference rectangle shown in FIG. 3) of the left-side tangent and the head tangent of the vehicle body, the offset distance of the positioning unit of the first vehicle relative to the positioning reference point of the first vehicle may be indicated by AntennaOffset. A possible definition of AntennaOffset is as follows:

```
AntennaOffset::= SEQUENCE {
                HeadDistanceFromAntenna,
                  -- Units are 1cm with a range from -4095cm to 4095cm
                LeftSideDistanceFromAntenna,
                  -- Units are 1cm with a range from -1023cm to 1023cm
        }
```

HeadDistanceFromAntenna defines a straight-line distance between the positioning unit and the head tangent, and a resolution is 1 cm. LeftsideDistanceFromAntenna defines a straight-line distance between the positioning unit and the left-side tangent of the vehicle, and a resolution is 1 cm. An offset value range complies with a convention on a value range of a length and a width of a vehicle in a V2X standard.

The offset distance of the positioning unit of the first vehicle relative to the positioning reference point of the first vehicle may be indicated by AntennaOffset(headDis, leftSide).

headDis (equivalent to HeadDistanceFromAntenna in the foregoing description) and leftSide (equivalent to LeftsideDistanceFromAntenna in the foregoing description) respectively indicate a straight-line distance from the positioning unit to a head of the first vehicle and a straight-line distance from the positioning unit to the left-side tangent of the first vehicle.

When the positioning reference point of the first vehicle is the vertex A of the reference rectangle shown in FIG. 3, the offset distance of the positioning unit of the first vehicle relative to the positioning reference point of the first vehicle may still be indicated by AntennaOffset (headDis, leftSide). headDis indicates an offset value of the positioning unit of the first vehicle relative to the vertex A of the reference rectangle in the longitudinal direction of the vehicle, and leftSide indicates an offset value of the positioning unit of the first vehicle relative to the vertex A of the reference rectangle in the transverse direction of the first vehicle.

For example, when the positioning reference point of the first vehicle is an intersection point (equivalent to the intersection point of the transverse centerline of the first vehicle and the longitudinal centerline of the first vehicle shown

13

in FIG. 2) of the left-side tangent and the head tangent of the vehicle body, the offset distance of the positioning unit of the first vehicle relative to the positioning reference point of the first vehicle may be indicated by AntennaOffset. A possible definition of AntennaOffset is as follows:

```
AntennaOffset: := SEQUENCE
  {
              x XfromGeometricCenter,
                -- Units are 1cm with a range from -4095cm to 4095cm
              y YfromGeometricCenter,
                  -- Units are 1cm with a range from -1023cm to 1023cm
  }
```

XfromGeometricCenter is an offset value of a traverse distance between the positioning unit and the geometric center of the vehicle, and a resolution is 1 cm. YfromGeometricCenter is an offset value of a longitudinal distance between the positioning unit and the geometric center of the vehicle, and a resolution is 1 cm. A value of the foregoing offset value complies with the convention on the value range of the length and the width of the vehicle in the V2X standard.

The offset distance of the positioning unit of the first vehicle relative to the positioning reference point of the first vehicle may be indicated by AntennaOffset(X,Y). X (equivalent to XfromGeometricCenter in the foregoing description) indicates an offset distance of the positioning unit relative to the geometric center of the first vehicle in the transverse direction of the vehicle. Y (equivalent to YfromGeometricCenter in the foregoing description) indicates an offset distance of the positioning unit relative to the geometric center of the first vehicle in the longitudinal direction of the first vehicle.

Optionally, in an embodiment, the positioning position of the positioning unit include a longitude and a latitude of the positioning unit.

Optionally, in an embodiment, the positioning information further includes vehicle size information of the first vehicle.

In this application, the vehicle size information of the first vehicle in the positioning information can be used to determine accuracy of the offset distance of the positioning unit in the positioning information of the first vehicle relative to the positioning reference point of the first vehicle, to obtain reliable information based on the positioning information.

Specifically, after the another vehicle or device obtains the positioning information of the first vehicle, if an offset distance that is of the positioning unit relative to the positioning reference point of the first vehicle and that is obtained from the positioning information is inconsistent with the size of the first vehicle (for example, an offset distance of the positioning unit relative to the positioning reference point of the first vehicle in a forward direction of the first vehicle exceeds the length of the first vehicle), it may be determined that the offset distance is incorrect, and the offset distance is not used when the position of the vehicle body of the first vehicle is subsequently determined.

Specifically, the vehicle size information of the first vehicle may include at least one of the length, the width, or a height of the first vehicle.

The length of the first vehicle may be a straight-line distance from a foremost end of the head of the first vehicle to a rearmost end of a tail of the first vehicle. The width of the first vehicle may be a straight-line distance from a most protruding position on a left side of the first vehicle to a most protruding position on a right side of the first vehicle. The height of the first vehicle may be a vertical distance from the ground on which the first vehicle is located to a highest point on a roof of the first vehicle when the first vehicle is on a horizontal road surface and the tire is inflated at a standard tire pressure specified by a manufacturer.

A specific definition of the vehicle size information may be shown as follows:

```
VehicleSize ::= SEQUENCE
        {
                width Vehicle Width,
                length VehicleLength,
                height VehicleHeight
        }
```

Vehicle Size indicates a vehicle size. Specifically, Vehicle Width indicates a vehicle width; VehicleLength indicates a vehicle length; and VehicleHeight indicates a vehicle height (the vehicle height is optional information, and the vehicle size information may include the vehicle height, or may not include the vehicle height).

Optionally, in an embodiment, the positioning information further includes motion information of the first vehicle.

The motion information of the first vehicle may include at least one piece of information such as a speed of the first vehicle, an acceleration of the first vehicle, and a steering angle of the first vehicle.

In this application, when the positioning information includes the motion information of the first vehicle, after obtaining the positioning information, the another vehicle can learn a motion status of the first vehicle based on the positioning information of the first vehicle, to further determine a safe distance from the first vehicle.

Alternatively, when the positioning information includes the motion information of the first vehicle, the another vehicle can control (for example, accelerate, decelerate, or turn) the another vehicle after obtaining the positioning information.

In addition, when the positioning information includes the motion information of the first vehicle, the another device (for example, the road side unit) can perform auxiliary control on a signal light based on obtained positioning information.

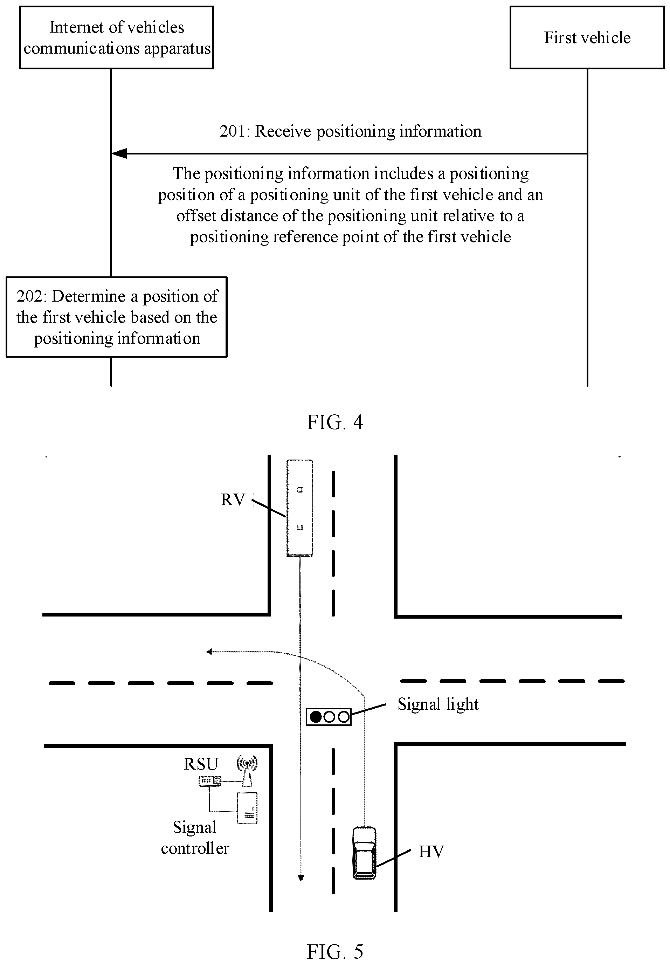

The foregoing describes in detail the internet of vehicles communication method in this embodiment of this application from a perspective of a transmit end with reference to FIG. 1 to FIG. 3. After the internet of vehicles communications apparatus sends the positioning information of the first vehicle to other internet of vehicles communications apparatuses, these internet of vehicles communications apparatuses may accurately determine the position of the first vehicle based on the positioning information of the first vehicle, to accurately position the first vehicle. The following describes an internet of vehicles positioning method according to an embodiment of this application from a perspective of a receive end with reference to FIG. 4. It should be understood that the foregoing related explanation, limitation, extension, and the like of the positioning information of the first vehicle are also applicable to another embodiment of this application.

FIG. 4 is a schematic flowchart of the internet of vehicles positioning method according to this embodiment of this application. The method shown in FIG. 4 includes step 201 to step 202, and the following describes step 201 and step 202 in detail.

201: An internet of vehicles communications apparatus receives positioning information sent by a first vehicle, where the positioning information includes a positioning position of a positioning unit of the first vehicle and an offset distance of the positioning unit relative to a positioning reference point of the first vehicle.

In step 201, the internet of vehicles communications apparatus may obtain, in a broadcast or unicast manner, the positioning information sent by the first vehicle. In addition, the first vehicle may send the positioning information of the first vehicle to the internet of vehicles communications apparatus through a communications device installed in the first vehicle.

202: The internet of vehicles communications apparatus determines a position of the first vehicle based on the positioning information.

In step 202, after obtaining the positioning information of the first vehicle, the internet of vehicles communications apparatus can obtain a position of the positioning unit of the first vehicle. Then, the offset distance (the offset distance of the positioning unit relative to the positioning reference point of the first vehicle) in the positioning information is combined, to determine an accurate position of an entire vehicle body of the first vehicle.

The internet of vehicles communications apparatus in step 201 and step 202 may be a communications apparatus in another vehicle (for example, a second vehicle), or may be a road side unit on a road side.

When the internet of vehicles apparatus is a communications apparatus in the second vehicle, the second vehicle can determine an accurate position of the first vehicle based on the positioning information of the first vehicle. In this way, the second vehicle can keep a safe distance from the first vehicle in a running process, and avoid scratching, collision, or the like with the first vehicle.

When the internet of vehicles apparatus is the road side unit on the road side, the road side unit can determine the accurate position of the first vehicle based on the positioning information of the first vehicle, to accurately control a signal light subsequently.

The internet of vehicles communications apparatus may obtain the positioning information of the first vehicle through a broadcast message or a unicast message.

In this application, the positioning information includes both the positioning position of the positioning unit and an offset distance of the positioning unit relative to a reference point. Therefore, the accurate position of the entire vehicle body of the first vehicle (or a vehicle outline of the first vehicle) may be determined based on the positioning information. This can improve positioning precision.

Specifically, after obtaining the positioning information of the first vehicle, another internet of vehicles communications apparatus may determine the positioning position of the positioning unit of the first vehicle based on the positioning information. Then, obtained size information of the first vehicle and obtained offset distance of the positioning unit relative to the reference point in the positioning information are combined, to relatively accurately determine the accurate position of the entire vehicle body of the first vehicle or the vehicle outline of the first vehicle.

Optionally, in an embodiment, the positioning reference point is a geometric center of the first vehicle.

The geometric center of the first vehicle may be an intersection point of a longitudinal centerline of the first vehicle and a transverse centerline of the first vehicle.

It should be understood that the positioning reference point may be any one of four vertexes of a reference rectangle. Alternatively, the positioning reference point may be any one of two intersection points of the reference rectangle and the longitudinal centerline of the first vehicle. Alternatively, the positioning reference point may be any one of two intersection points of the reference rectangle and the transverse centerline of the first vehicle.

Optionally, in an embodiment, the positioning reference point is a vertex of the reference rectangle. Alternatively, the positioning reference point is an intersection point of the reference rectangle and the longitudinal centerline of the first vehicle. Alternatively, the positioning reference point is an intersection point of the reference rectangle and the transverse centerline of the first vehicle. The reference rectangle is a rectangle formed by line segments tangent to an outline of the first vehicle.

Optionally, in an embodiment, a length of the reference rectangle is the same as a length of the first vehicle, and a width of the reference rectangle is the same as a width of the first vehicle.

The width of the first vehicle may also be considered as a distance between two planes that are parallel to a longitudinal symmetric plane of the first vehicle and that separately abut against fixed protruding parts on two sides of the first vehicle. Simply, the width of the first vehicle is a distance between two extreme points in a width direction of the first vehicle.

The "fixed protruding parts on the two sides" do not include the following parts of the first vehicle: rear view mirrors (which may also be referred to as reflectors, and are located in a left front part and a right front part of the first vehicle), a side identification light, a position indicating light, a direction indicator, a mud guard, and deformation of a contact part between a tire and the ground.

Optionally, in an embodiment, the length of the first vehicle is a straight-line distance from a foremost end of a head of the first vehicle to a rearmost end of a tail of the first vehicle, and the width of the first vehicle is a straight-line distance from a most protruding position on a left side of the first vehicle to a most protruding position on a right side of the first vehicle.

Optionally, in an embodiment, the offset distance of the positioning unit relative to the positioning reference point of the first vehicle includes an offset value of the positioning unit relative to the positioning reference point in a first direction and an offset value of the positioning unit relative to the positioning reference point in a second direction. The first direction is a direction of the longitudinal centerline of the first vehicle. The second direction is perpendicular to the first direction.

Optionally, in an embodiment, the positioning position of the positioning unit include a longitude and a latitude of the positioning unit.

Optionally, in an embodiment, a resolution of the offset distance of the positioning unit relative to the positioning reference point of the first vehicle is 1 cm.

In this application, a relatively low resolution is set, so that a position of the entire vehicle body of the first vehicle or the vehicle outline of the first vehicle can be more accurately determined based on the positioning information.

Optionally, in an embodiment, the positioning information further includes vehicle size information of the first vehicle.

The vehicle size information of the first vehicle includes at least one of the length, the width, or a height of the first vehicle.

The length of the first vehicle may be the straight-line distance from the foremost end of the head of the first vehicle to the rearmost end of the tail of the first vehicle. The width of the first vehicle may be the straight-line distance from the most protruding position on the left side of the first vehicle to the most protruding position on the right side of the first vehicle. The height of the first vehicle may be a vertical distance from the ground on which the first vehicle is located to a highest point on a roof of the first vehicle when the first vehicle is on a horizontal road surface and the tire is inflated at a standard tire pressure specified by a manufacturer.

In this application, the vehicle size information of the first vehicle in the positioning information can be used to determine accuracy of the offset distance of the positioning unit in the positioning information of the first vehicle relative to the positioning reference point of the first vehicle, to obtain reliable information based on the positioning information.

Specifically, after another vehicle or device obtains the positioning information of the first vehicle, if an offset distance that is of the positioning unit relative to the positioning reference point of the first vehicle and that is obtained from the positioning information is inconsistent with a size of the first vehicle (for example, an offset distance of the positioning unit relative to the positioning reference point of the first vehicle in a forward direction of the first vehicle exceeds the length of the first vehicle), it may be determined that the offset distance is incorrect, and the offset distance is not used when a position of a vehicle body of the first vehicle is subsequently determined.

Optionally, in an embodiment, the positioning information further includes motion information of the first vehicle.

The motion information of the first vehicle includes at least one piece of information such as a speed of the first vehicle, an acceleration of the first vehicle, and a steering angle of the first vehicle.

In this application, when the positioning information includes the motion information of the first vehicle, after obtaining the positioning information, the another vehicle can learn a motion status of the first vehicle based on the positioning information of the first vehicle, to further determine a safe distance from the first vehicle.

Alternatively, when the positioning information includes the motion information of the first vehicle, the another vehicle can control (for example, accelerate, decelerate, or turn) the another vehicle after obtaining the positioning information.

In addition, when the positioning information includes the motion information of the first vehicle, the another device (for example, the road side unit) can perform auxiliary control on the signal light based on obtained positioning information.

In this application, the positioning information of the first vehicle is applied to different scenarios. After obtaining the positioning information of the first vehicle, another device may perform different processing based on the positioning information. With reference to a specific application scenario, the following describes in detail possible application of the positioning information by using an example in which the positioning information is carried in the BSM (the positioning information may alternatively be carried in the RSM).

FIG. 5 is a schematic diagram of a left turn assist scenario.

In the left turn assist scenario shown in FIG. 5, an example in which a traffic vehicle at a traffic intersection turns left is used. A traffic signal light is adjusted based on a speed of the vehicle and an accurate position of the vehicle at the intersection, to improve safe passing efficiency of the traffic intersection. Specifically, when a host vehicle (host vehicle, HV) waits at the intersection due to a left-turn red light, a remote vehicle (remote vehicle, RV) driving towards the intersection, especially a long vehicle, passes through the intersection. After determining that a tail of the remote vehicle passes through a turning safety area, a road side unit immediately controls the signal light to turn on a left-turn green light, to allow the host vehicle to pass safely and efficiently.

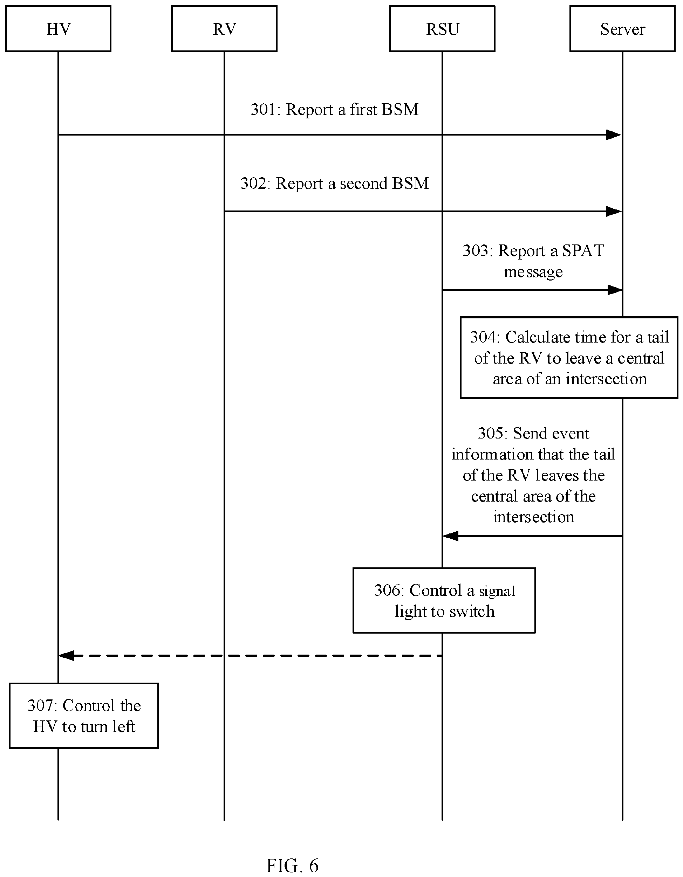

FIG. 6 is a flowchart of left turn assist. A procedure shown in FIG. 6 specifically includes step 301 to step 307. The following describes step 301 to step 307 in detail.

301: An HV reports a first BSM to a server.

302: An RV reports a second BSM to the server.

In step 301 and step 302, the HV and the RV may report the first BSM and the second BSM to the server through vehicle communications apparatuses installed in the HV and the RV.

The HV may be a vehicle that needs to turn left. The RV is another vehicle related to a left-turn vehicle (for example, a vehicle that may affect turning of the left-turn vehicle).

In addition, the first BSM includes a positioning position of a positioning unit of the HV and an offset distance of the positioning unit of the HV relative to a positioning reference point of the HV. Similarly, the second BSM includes a positioning position of a positioning unit of the RV and an offset distance of the positioning unit of the HV relative to a positioning reference point of the RV.

303: An RSU reports a signal phase and timing (signal phase and timing, SPAT) message to the server.

The SPAT message may also be referred to as a signal light message, and includes a signal phase and a signal time sequence of the signal light.

304: The server calculates time for a tail of the RV to leave a central area of the intersection.

The server herein may be a server in internet of vehicles communication. The server may be configured to position a vehicle. Further, the vehicle server may perform auxiliary control on running of the vehicle in a running process of the vehicle.

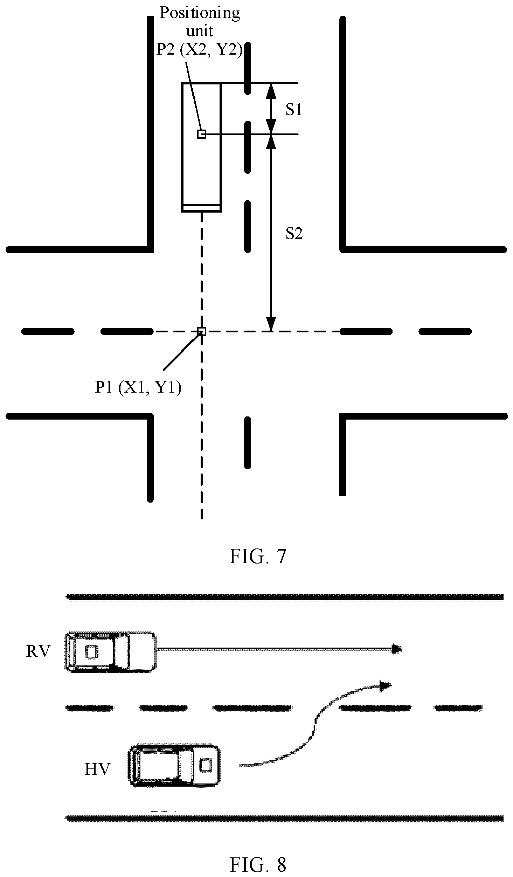

With reference to FIG. 7, the following describes in detail a process in which the server calculates the time for the tail of the RV to leave the central area of the intersection.

Specifically, the time for the tail of the RV to leave the central area of the intersection may be calculated according to a formula (1).

$$t = \frac{S1 + S2}{v}$$

$$(1)$$

As shown in FIG. 7, the RV needs to pass through a position PI (XI, Y1) when passing through the central area of the intersection. A current position of the positioning unit of the RV is P2 (X2, Y2). S1 indicates a distance between the positioning unit of the RV and the tail of the RV. S2 indicates a distance between the positioning unit of the RV and PI. v is a running speed of the RV. If the tail of the RV needs to leave the central area of the intersection, a running distance of the RV is at least S1+S2.

S1 may be obtained based on the second BSM of the RV. It is assumed that the positioning reference point of the RV is an intersection point (equivalent to the vertex A of the reference rectangle shown in FIG. 3) of a left-side tangent and a head tangent of a vehicle body of the RV. In this case, S2 may be obtained through calculation according to a formula (2).

$$S2 = L - M1 \quad (2)$$

L indicates a vehicle length of the RV. M1 indicates an offset value of the positioning unit of the RV relative to the positioning reference point of the RV in a longitudinal direction of the RV.

S1 may be obtained through calculation according to a formula (3).

$$S1 = 2R * arc\sin(\sqrt{\sin^2(\frac{Y2-Y1}{2}) + \cos(Y2) * \cos(Y1) * \sin^2(\frac{X2-X1}{2})})$$ (3)

R indicates the radius of the earth, and is measured in meter. X1 and Y1 are respectively a horizontal coordinate and a vertical coordinate of P1 (X1 and Y1 respectively indicate a longitude and a latitude of P1). X2 and Y2 are respectively a horizontal coordinate and a vertical coordinate of P2 (X2 and Y2 respectively indicate a longitude and a latitude of P2).

305: The server sends, to the RSU, event information that the tail of the RV leaves the central area of the intersection.

When the tail of the RV leaves the central area of the intersection, the HV can turn left normally. Therefore, after calculating that the tail of the RV leaves the central area of the intersection, the server may send event information of the central area of the intersection to the RSU. In this case, the RSU may control the signal light to switch, to enable the signal light to switch from disabling a left turn to enabling the left turn.

306: The RSU controls the signal light to switch.

Specifically, in step 306, the RSU may control the signal light to switch from disabling the left turn to enabling the left turn.

When controlling the signal light to switch, the RSU may send control information to the signal light. For example, in step 306, the RSU may send left-turn communication control information to the signal light, so that the signal light switches from disabling the left turn to enabling the left turn.

307: The HV is controlled to turn left.

When the signal light switches to enabling the left turn, the HV starts to turn left, to implement a left turn of the vehicle. When the HV is manually driven, a driver controls the vehicle to turn left when seeing the signal light. When the HV is an autonomous vehicle, the HV may directly obtain a signal light signal by communicating with the RSU or the signal light. When obtaining information that the signal light enables the left turn, the vehicle is automatically controlled to turn left.

In addition to being applied to the left turn assist scenario, this application may also be applied to a lane change assist scenario.

FIG. 8 is a schematic diagram of the lane change assist scenario.

In a running process, a vehicle usually needs to change a lane. As shown in FIG. 8, an HV and an RV separately run on two adjacent lanes. When the HV needs to change a lane, an accurate position of the vehicle RV on another lane needs to be determined, and in a lane changing process, it needs to be ensured that a distance between a vehicle body of the HV and a vehicle body of the RV is within a safe distance. In addition, the HV needs to change the lane within a preset lane changing time period.

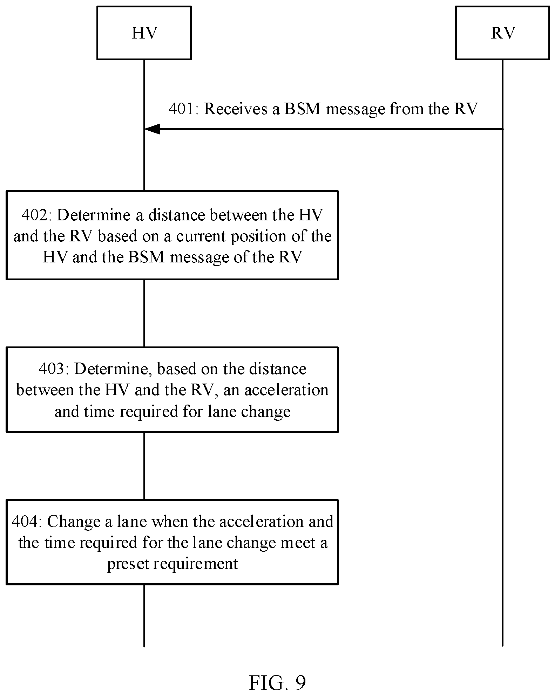

It should be understood that the RV may be a vehicle, in an adjacent lane to the HV, that is relatively close to the HV. There may be one or more RVs. When there is a plurality of RVs, a BSM message of each RV may be received according to a process shown in FIG. 9. Then, subsequent lane change control is performed.

The following describes an entire process of lane change assist with reference to FIG. 9.

FIG. 9 is a flowchart of the lane change assist. The process shown in FIG. 9 includes step 401 to step 404. The following describes step 401 to step 404 in detail.

401: An HV receives a BSM message from an RV

The BSM message of the RV includes a current position (for example, a longitude and a latitude of a positioning unit) of the positioning unit of the RV, an offset distance between the positioning unit of the RV and a positioning reference point of the RV, and a length and a width of a vehicle body of the RV.

The RV may send the BSM message to surroundings in a broadcast manner, so that a vehicle around the RV can obtain the BSM message of the RV, and then can determine a specific position of the RV. In this way, the vehicle around the RV can perform accurate control based on a position of the RV when running.

402: The HV determines a distance between the HV and the RV based on a current position of the HV and the BSM message of the RV.

It should be understood that the current position of the HV may be a current position of an entire vehicle body or a vehicle outline of the HV In step 402, the HV may first obtain, based on a positioning unit in the HV, a current position of the positioning unit. Then, combined with size information of the HV, the current position of the vehicle body or outline of the HV may be obtained. When determining the distance between the HV and the RV based on the current position of the vehicle body or outline of the HV and the BSM message of the RV, the HV may determine a shortest distance between an edge of the vehicle body of the HV and an edge of the vehicle body of the RV.

403: The HV determines, based on the distance between the HV and the RV, an acceleration and time required for lane change.

In a lane changing process, the distance between the HV and the RV needs to be kept greater than or equal to a safe lane changing distance. Specifically, in the lane changing process, the shortest distance between the edge of the vehicle body of the HV and the edge of the vehicle body of the RV is greater than or equal to a safe distance.

404: When the acceleration and the time required for the lane change meet a preset requirement, the HV changes the lane.

That the acceleration and the time required for the lane change meet the preset requirement may mean that the acceleration required for the lane change cannot exceed a maximum acceleration allowed by the HV, and the time required for the lane change needs to be less than maximum time allowed for the lane change.

If at least one of the acceleration and the time required for the lane change does not meet the preset requirement, the lane change is given up, and the HV continues to run in a current lane.

It should be understood that the left turn assist and the lane change assist are merely two specific application scenarios of this application. This application may further be applied to other scenarios in which a vehicle needs to be controlled or auxiliary control of the vehicle is required, such as forward collision warning, future self-driving, and another scenario with a relatively high requirement on inter-vehicle distance control.

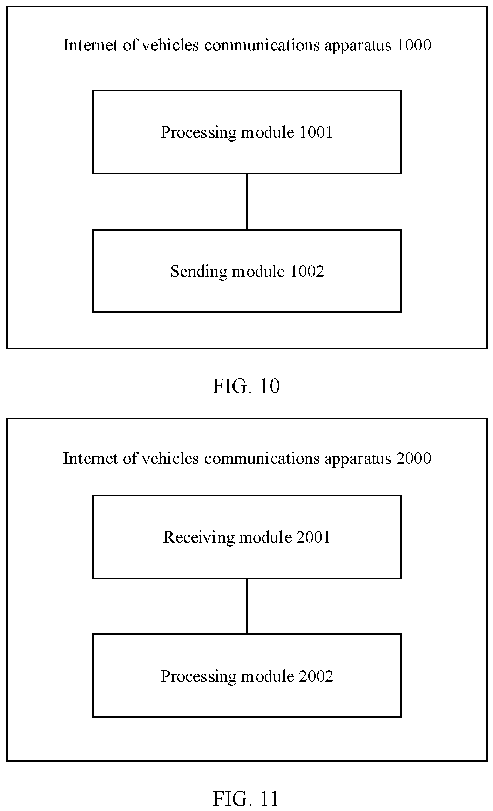

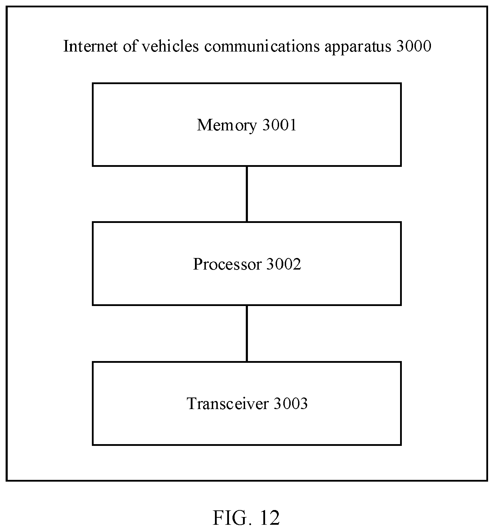

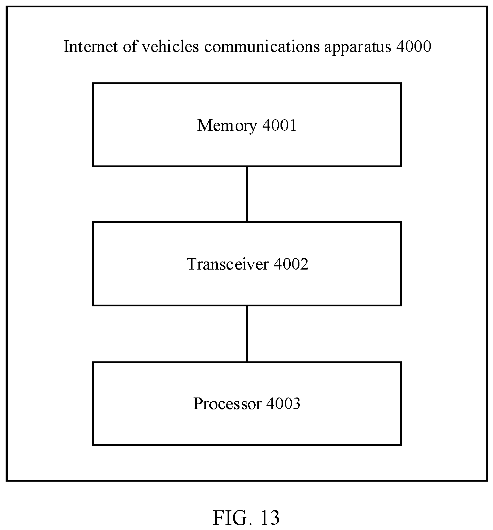

The foregoing describes in detail the internet of vehicles communication method and the internet of vehicles positioning method in the embodiments of this application with reference to FIG. 1 to FIG. 9. The following describes an internet of vehicles communications apparatus in the embodiments of this application with reference to FIG. 10 to FIG. 13. It should be understood that internet of vehicles communications apparatuses in FIG. 10 and FIG. 12 can perform steps in the internet of vehicles communication method in the embodiments of this application, and internet of vehicles communications apparatuses in FIG. 11 and FIG. 13 can perform steps performed by the internet of vehicles communications apparatus in the internet of vehicles positioning method in the embodiments of this application.

FIG. 10 is a schematic block diagram of an internet of vehicles communications apparatus according to an embodiment of this application. An internet of vehicles communications apparatus 1000 in FIG. 10 includes:

a processing module 1001, configured to generate positioning information, where the positioning information includes a positioning position of a positioning unit of a first vehicle and an offset distance of the positioning unit relative to a positioning reference point of the first vehicle; and
a sending module 1002, configured to send the positioning information to another device.

In this application, the positioning information includes both the positioning position of the positioning unit of the first vehicle and an offset distance of the positioning unit relative to a reference point. Therefore, an accurate position of an entire vehicle body of the first vehicle (or a vehicle outline of the first vehicle) may be determined based on the positioning information. This can improve positioning precision.

Optionally, in an embodiment, the positioning reference point is a geometric center of the first vehicle.

Optionally, in an embodiment, the positioning reference point is a vertex of a reference rectangle. Alternatively, the positioning reference point is an intersection point of the reference rectangle and a longitudinal centerline of the first vehicle. Alternatively, the positioning reference point is an intersection point of the reference rectangle and a transverse centerline of the first vehicle. The reference rectangle is a rectangle formed by line segments tangent to an outline of the first vehicle.

Optionally, in an embodiment, a length of the reference rectangle is the same as a length of the first vehicle, and a width of the reference rectangle is the same as a width of the first vehicle.

Optionally, in an embodiment, the length of the first vehicle is a straight-line distance from a foremost end of a head of the first vehicle to a rearmost end of a tail of the first vehicle, and the width of the first vehicle is a straight-line distance from a most protruding position on a left side of the first vehicle to a most protruding position on a right side of the first vehicle.

Optionally, in an embodiment, the offset distance of the positioning unit relative to the positioning reference point of the first vehicle includes an offset value of the positioning unit relative to the positioning reference point in a first direction and an offset value of the positioning unit relative to the positioning reference point in a second direction. The first direction is a direction of the longitudinal centerline of the first vehicle. The second direction is perpendicular to the first direction.

Optionally, in an embodiment, the positioning information further includes vehicle size information of the first vehicle and/or motion information of the first vehicle.

FIG. 11 is a schematic block diagram of an internet of vehicles communications apparatus according to an embodiment of this application. An internet of vehicles communications apparatus 2000 in FIG. 11 may be an internet of vehicles communications apparatus installed in another vehicle. Alternatively, the internet of vehicles communications apparatus 2000 may be specifically a road side unit.

The internet of vehicles communications apparatus 2000 includes:

a receiving module 2001, configured to receive positioning information sent by a first vehicle, where the positioning information includes a positioning position of a positioning unit of the first vehicle and an offset distance of the positioning unit relative to a positioning reference point of the first vehicle; and
a processing module 2002, configured to determine a position of the first vehicle based on the positioning information.

In this application, the positioning information includes both the positioning position of the positioning unit of the first vehicle and an offset distance of the positioning unit relative to a reference point. Therefore, an accurate position of an entire vehicle body of the first vehicle (or a vehicle outline of the first vehicle) may be determined based on the positioning information. This can improve positioning precision.

Optionally, in an embodiment, the positioning reference point is a geometric center of the first vehicle.

Optionally, in an embodiment, the positioning reference point is a vertex of a reference rectangle. Alternatively, the positioning reference point is an intersection point of the reference rectangle and a longitudinal centerline of the first vehicle. Alternatively, the positioning reference point is an intersection point of the reference rectangle and a transverse centerline of the first vehicle. The reference rectangle is a rectangle formed by line segments tangent to an outline of the first vehicle.

Optionally, in an embodiment, a length of the reference rectangle is the same as a length of the first vehicle, and a width of the reference rectangle is the same as a width of the first vehicle.

Optionally, in an embodiment, the length of the first vehicle is a straight-line distance from a foremost end of the head of the first vehicle to a rearmost end of the tail of the first vehicle, and the width of the first vehicle is a straight-line distance from a most protruding position on a left side of the first vehicle to a most protruding position on a right side of the first vehicle.

Optionally, in an embodiment, the offset distance of the positioning unit relative to the positioning reference point of the first vehicle includes an offset value of the positioning unit relative to the positioning reference point in a first direction and an offset value of the positioning unit relative to the positioning reference point in a second direction. The first direction is a direction of the longitudinal centerline of the first vehicle. The second direction is perpendicular to the first direction.

Optionally, in an embodiment, the positioning information further includes vehicle size information of the first vehicle and/or motion information of the first vehicle.

Optionally, in an embodiment, the internet of vehicles communications apparatus is an apparatus installed in a second vehicle or the road side unit.

FIG. 12 is a schematic block diagram of an internet of vehicles communications apparatus according to an embodiment of this application.

An internet of vehicles communications apparatus 3000 shown in FIG. 12 includes:

a memory 3001, configured to store a program;
a processor 3002, configured to execute the program stored in the memory 3001, where when the program stored in the memory 3001 is executed, the processor 3002 is configured to generate positioning information, and the positioning information includes a positioning position of a positioning unit of a first vehicle and an offset distance of the positioning unit relative to a positioning reference point of the first vehicle; and
a transceiver 3003, configured to send the positioning information to another device.

The internet of vehicles communications apparatus 3000 may be an apparatus installed in the first vehicle.

The processor 3002 may be a CPU, or some dedicated chips with a data processing function, or an FPGA, or the like.

In addition, the processor 3002 may alternatively be a CPU plus a dedicated chip, or a CPU plus an FPGA, or a CPU plus a dedicated chip plus an FPGA.

FIG. 13 is a schematic block diagram of an internet of vehicles communications apparatus according to an embodiment of this application.

An internet of vehicles communications apparatus 4000 shown in FIG. 13 includes:

a memory 4001, configured to store a program;
a transceiver 4002, configured to receive positioning information sent by a first vehicle, where the positioning information includes a positioning position of a positioning unit of the first vehicle and an offset distance of the positioning unit relative to a positioning reference point of the first vehicle; and

a processor 4003, configured to execute the program stored in the memory 4001, where when the program stored in the memory 4001 is executed, the processor 4003 is configured to determine a position of the first vehicle based on the positioning information.

The internet of vehicles communications apparatus 4000 may be an apparatus installed in a second vehicle or a road side unit.

The processor 4003 may be a CPU, or some dedicated chips with a data processing function, or an FPGA, or the like.

In addition, the processor 4003 may alternatively be a CPU plus a dedicated chip, or a CPU plus an FPGA, or a CPU plus a dedicated chip plus an FPGA.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing apparatuss and units, refer to a corresponding process in the foregoing method embodiments, and details are not described herein again.

In the several embodiments provided in this application, it should be understood that the disclosed apparatus and method may be implemented in another manner. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An internet of vehicles communication method, comprising:

   generating, by an internet of vehicles communications apparatus, positioning information, wherein the positioning information comprises a positioning position of a positioning unit of a first vehicle and an offset distance of the positioning unit relative to a positioning reference point of the first vehicle, and the internet of vehicles communications apparatus is an apparatus installed in the first vehicle; and

   sending, by the internet of vehicles communications apparatus, the positioning information to another device.

2. The method according to claim 1, wherein the positioning reference point is a geometric center of the first vehicle.

3. The method according to claim 1, wherein the positioning reference point is a vertex of a reference rectangle, or the positioning reference point is an intersection point of the reference rectangle and a longitudinal centerline of the first vehicle, or the positioning reference point is an intersection point of the reference rectangle and a transverse centerline of the first vehicle, and the reference rectangle is a rectangle formed by line segments tangent to an outline of the first vehicle.

4. The method according to claim 3, wherein a length of the reference rectangle is the same as a length of the first vehicle, and a width of the reference rectangle is the same as a width of the first vehicle.

5. The method according to claim 4, wherein the length of the first vehicle is a straight-line distance from a foremost end of a head of the first vehicle to a rearmost end of a tail of the first vehicle, and the width of the first vehicle is a straight-line distance from a most protruding position on a left side of the first vehicle to a most protruding position on a right side of the first vehicle.

6. The method according to any one of claims 1 to 5, wherein the offset distance of the positioning unit relative to the positioning reference point of the first vehicle comprises an offset value of the positioning unit relative to the positioning reference point in a first direction and an offset value of the positioning unit relative to the positioning reference point in a second direction, the first direction is a direction of the longitudinal centerline of the first vehicle, and the second direction is perpendicular to the first direction.

7. The method according to any one of claims 1 to 6, wherein the positioning information further comprises vehicle size information of the first vehicle and/or motion information of the first vehicle.

8. An internet of vehicles positioning method, comprising:

   receiving, by an internet of vehicles communications apparatus, positioning information sent by a first vehicle, wherein the positioning information comprises a positioning position of a positioning unit of the first vehicle and an offset distance of the positioning unit relative to a positioning reference point of the first vehicle; and
   determining, by the internet of vehicles communications apparatus, a position of the first vehicle based on the positioning information.

9. The method according to claim 8, wherein the positioning reference point is a geometric center of the first vehicle.

10. The method according to claim 8, wherein the positioning reference point is a vertex of a reference rectangle, or the positioning reference point is an intersection point of the reference rectangle and a longitudinal centerline of the first vehicle, or the positioning reference point is an intersection point of the reference rectangle and a transverse centerline of the first vehicle, and the reference rectangle is a rectangle formed by line segments tangent to an outline of the first vehicle.

11. The method according to claim 10, wherein a length of the reference rectangle is the same as a length of the first vehicle, and a width of the reference rectangle is the same as a width of the first vehicle.

12. The method according to claim 11, wherein the length of the first vehicle is a straight-line distance from a foremost end of a head of the first vehicle to a rearmost end of a tail of the first vehicle, and the width of the first vehicle is a straight-line distance from a most protruding position on a left side of the first vehicle to a most protruding position on a right side of the first vehicle.

13. The method according to any one of claims 8 to 12, wherein the offset distance of the positioning unit relative to the positioning reference point of the first vehicle comprises an offset value of the positioning unit relative to the positioning reference point in a first direction and an offset value of the positioning unit relative to the positioning reference point in a second direction, the first direction is a direction of the longitudinal centerline of the first vehicle, and the second direction is perpendicular to the first direction.

14. The method according to any one of claims 8 to 13, wherein the positioning information further comprises vehicle size information of the first vehicle and/or motion information of the first vehicle.

15. The method according to any one of claims 8 to 14, wherein the internet of vehicles communications apparatus is an apparatus installed in a second vehicle or a road side unit.

16. An internet of vehicles communications apparatus, wherein the internet of vehicles communications apparatus is installed in a first vehicle, and comprises:

    a processing module, configured to generate positioning information, wherein the positioning information comprises a positioning position of a positioning unit of the first vehicle and an offset distance of the positioning unit relative to a positioning reference point of the first vehicle; and
    a sending module, configured to send the positioning information to another device.

17. The internet of vehicles communications apparatus according to claim 16, wherein the positioning reference point is a geometric center of the first vehicle.

18. The internet of vehicles communications apparatus according to claim 16, wherein the positioning reference point is a vertex of a reference rectangle, or the positioning reference point is an intersection point of the reference rectangle and a longitudinal centerline of the first vehicle, or the positioning reference point is an intersection point of the reference rectangle and a transverse centerline of the first vehicle, and the reference rectangle is a rectangle formed by line segments tangent to an outline of the first vehicle.

19. The internet of vehicles communications apparatus according to claim 18, wherein a length of the reference rectangle is the same as a length of the first vehicle, and a width of the reference rectangle is the same as a width of the first vehicle.

20. The internet of vehicles communications apparatus according to claim 19, wherein the length of the first vehicle is a straight-line distance from a foremost end of a head of the first vehicle to a rearmost end of a tail of the first vehicle, and the width of the first vehicle is a straight-line distance from a most protruding position on a left side of the first vehicle to a most protruding position on a right side of the first vehicle.

21. The internet of vehicles communications apparatus according to any one of claims 16 to 20, wherein the offset distance of the positioning unit relative to the positioning reference point of the first vehicle comprises an offset value of the positioning unit relative to the positioning reference point in a first direction and an offset value of the positioning unit relative to the positioning reference point in a second direction, the first direction is a direction of the longitudinal centerline of the first vehicle, and the second direction is perpendicular to the first direction.

22. The internet of vehicles communications apparatus according to any one of claims 16 to 21, wherein the positioning information further comprises vehicle size information of the first vehicle and/or motion information of the first vehicle.

23. An internet of vehicles communications apparatus, comprising:

    a receiving module, configured to receive positioning information sent by a first vehicle, wherein the positioning information comprises a positioning position of a positioning unit of the first vehicle and an offset distance of the positioning unit relative to a positioning reference point of the first vehicle; and
    a processing module, configured to determine a position of the first vehicle based on the positioning information.

24. The internet of vehicles communications apparatus according to claim 23, wherein the positioning reference point is a geometric center of the first vehicle.

25. The internet of vehicles communications apparatus according to claim 23, wherein the positioning reference point is a vertex of a reference rectangle, or the positioning reference point is an intersection point of the reference rectangle and a longitudinal centerline of the first vehicle, or the positioning reference point is an intersection point of the reference rectangle and a transverse centerline of the first vehicle, and the reference rectangle is a rectangle formed by line segments tangent to an outline of the first vehicle.

26. The internet of vehicles communications apparatus according to claim 25, wherein a length of the reference rectangle is the same as a length of the first vehicle, and a width of the reference rectangle is the same as a width of the first vehicle.

27. The internet of vehicles communications apparatus according to claim 26, wherein the length of the first vehicle is a straight-line distance from a foremost end of a head of the first vehicle to a rearmost end of a tail of the first vehicle, and the width of the first vehicle is a straight-line distance from a most protruding position on a left side of the first vehicle to a most protruding position on a right side of the first vehicle.

28. The internet of vehicles communications apparatus according to any one of claims 23 to 27, wherein the offset distance of the positioning unit relative to the positioning reference point of the first vehicle comprises an offset value of the positioning unit relative to the positioning reference point in a first direction and an offset value of the positioning unit relative to the positioning reference point in a second direction, the first direction is a direction of the longitudinal centerline of the first vehicle, and the second direction is perpendicular to the first direction.

29. The internet of vehicles communications apparatus according to any one of claims 23 to 28, wherein the positioning information further comprises vehicle size information of the first vehicle and/or motion information of the first vehicle.

30. The internet of vehicles communications apparatus according to any one of claims 23 to 29, wherein the internet of vehicles communications apparatus is an apparatus installed in a second vehicle or a road side unit.

An internet of vehicles communications apparatus generates positioning information, where the positioning information includes a positioning position of a positioning unit of a first vehicle and an offset distance of the positioning unit relative to a positioning reference point of the first vehicle

101

The internet of vehicles communications apparatus sends the positioning information to another device

102

FIG. 1

Left rear wheel          Left front wheel

Positioning antenna

Positioning reference point

Right rear wheel          Right front wheel

FIG. 2

Left rear wheel          H          Left front wheel          Reference rectangle

D          A

F          X          Y          E

Positioning antenna

C          I          B

Right rear wheel          Right front wheel

FIG. 3

| Internet of vehicles communications apparatus | | First vehicle |
|---|---|---|

201: Receive positioning information

The positioning information includes a positioning position of a positioning unit of the first vehicle and an offset distance of the positioning unit relative to a positioning reference point of the first vehicle

202: Determine a position of the first vehicle based on the positioning information

FIG. 4

RV

Signal light

RSU

Signal controller

HV

FIG. 5

| HV | RV | RSU | Server |
|---|---|---|---|

301: Report a first BSM

302: Report a second BSM

303: Report a SPAT message

304: Calculate time for a tail of the RV to leave a central area of an intersection

305: Send event information that the tail of the RV leaves the central area of the intersection

306: Control a signal light to switch

307: Control the HV to turn left

FIG. 6

Positioning
unit
P2 (X2, Y2)

S1

S2

P1 (X1, Y1)

FIG. 7

RV

HV

FIG. 8

```
        ┌──────────┐                          ┌──────────┐
        │    HV    │                          │    RV    │
        └──────────┘                          └──────────┘
              │                                     │
              │   401: Receives a BSM message from the RV
              │◄────────────────────────────────────│
              │                                     │
   ┌──────────────────────────────────┐            │
   │ 402: Determine a distance between the HV       │
   │ and the RV based on a current position of the  │
   │    HV and the BSM message of the RV │          │
   └──────────────────────────────────┘            │
              │                                     │
   ┌──────────────────────────────────┐            │
   │ 403: Determine, based on the distance          │
   │ between the HV and the RV, an acceleration     │
   │    and time required for lane change │         │
   └──────────────────────────────────┘            │
              │                                     │
   ┌──────────────────────────────────┐            │
   │ 404: Change a lane when the acceleration and   │
   │ the time required for the lane change meet a   │
   │         preset requirement │                   │
   └──────────────────────────────────┘            │
              │                                     │
```

FIG. 9

Internet of vehicles communications apparatus 1000

Processing module 1001

Sending module 1002

FIG. 10

Internet of vehicles communications apparatus 2000

Receiving module 2001

Processing module 2002

FIG. 11

Internet of vehicles communications apparatus 3000

Memory 3001

Processor 3002

Transceiver 3003

FIG. 12

Internet of vehicles communications apparatus 4000

Memory 4001

Transceiver 4002

Processor 4003

FIG. 13

## INTERNATIONAL SEARCH REPORT

International application No.

**PCT/CN2019/103932**

| A. CLASSIFICATION OF SUBJECT MATTER |
|---|
| H04W 4/02(2018.01)i |
| According to International Patent Classification (IPC) or to both national classification and IPC |

| B. FIELDS SEARCHED |
|---|
| Minimum documentation searched (classification system followed by classification symbols) |
|    H04W |
| Documentation searched other than minimum documentation to the extent that such documents are included in the fields searched |
| Electronic data base consulted during the international search (name of data base and, where practicable, search terms used)<br>   WPI, EPODOC, CNPAT, CNKI, IEEE: 车联网, 车辆, 定位, 参考, 偏移, 外形, 轮廓, vehicle, car, location, position, reference, offset, shape, outline |

| C. | DOCUMENTS CONSIDERED TO BE RELEVANT | |
|---|---|---|
| Category* | Citation of document, with indication, where appropriate, of the relevant passages | Relevant to claim No. |
| X | CN 107238814 A (RU, Jingyang) 10 October 2017 (2017-10-10)<br>   description, paragraphs [0030]-[0034] | 1-30 |
| A | CN 108303720 A (SHENZHEN HAYLION TECHNOLOGIES CO., LTD.) 20 July 2018 (2018-07-20)<br>   entire document | 1-30 |
| A | US 2016018822 A1 (HELICO AEROSPACE INDUSTRIES SIA) 21 January 2016 (2016-01-21)<br>   entire document | 1-30 |
| A | US 2008154504 A1 (DEERE & COMPANY) 26 June 2008 (2008-06-26)<br>   entire document | 1-30 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2019** | **29 November 2019** |

| Name and mailing address of the ISA/CN | Authorized officer |
|---|---|
| **China National Intellectual Property Administration**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/103932**

| Patent document cited in search report | | | Publication date (day/month/year) | Patent family member(s) | | | Publication date (day/month/year) |
|---|---|---|---|---|---|---|---|
| CN | 107238814 | A | 10 October 2017 | None | | | |
| CN | 108303720 | A | 20 July 2018 | WO | 2019134180 | A1 | 11 July 2019 |
| US | 2016018822 | A1 | 21 January 2016 | US | 2018088580 | A1 | 29 March 2018 |
| | | | | US | 2018110785 | A1 | 26 April 2018 |
| | | | | WO | 2016011270 | A2 | 21 January 2016 |
| US | 2008154504 | A1 | 26 June 2008 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811300851